(19) Europäisches Patentamt
European Patent Office
Office européen des brevets

(11) **EP 4 657 292 B1**

(12) **EUROPÄISCHE PATENTSCHRIFT**

(45) Veröffentlichungstag und Bekanntmachung des Hinweises auf die Patenterteilung:
**22.04.2026  Patentblatt 2026/17**

(21) Anmeldenummer: **25177554.0**

(22) Anmeldetag: **20.05.2025**

(51) Internationale Patentklassifikation (IPC):
*G06F 21/55* (2013.01)      *H04L 9/40* (2022.01)

(52) Gemeinsame Patentklassifikation (CPC):
**G06F 21/552; G06F 21/554; H04L 63/1416**

(54) **VERFAHREN ZUR KONFIGURATION EINES ERKENNUNGSSYSTEMS ZUR CHARAKTERISIERUNG ANOMALER BETRIEBSZUSTÄNDE EINES COMPUTERSYSTEMS**

METHOD FOR CONFIGURING A DETECTION SYSTEM FOR CHARACTERIZING ANOMALOUS OPERATING STATES OF A COMPUTER SYSTEM

PROCÉDÉ DE CONFIGURATION D'UN SYSTÈME DE DÉTECTION POUR CARACTÉRISER DES ÉTATS DE FONCTIONNEMENT ANORMAUX D'UN SYSTÈME INFORMATIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.05.2024  AT 504352024**

(43) Veröffentlichungstag der Anmeldung:
**03.12.2025  Patentblatt 2025/49**

(73) Patentinhaber: **AIT Austrian Institute of Technology GmbH**
**1210 Wien (AT)**

(72) Erfinder:
• **Beck, Viktor**
  **1030 Wien (AT)**
• **Landauer, Max**
  **1070 Wien (AT)**
• **Wurzenberger, Markus**
  **1020 Wien (AT)**
• **Skopik, Florian**
  **2000 Stockerau (AT)**

(74) Vertreter: **Wildhack & Jellinek Patentanwälte GmbH**
**Landstraßer Hauptstraße 50**
**1030 Wien (AT)**

(56) Entgegenhaltungen:
**US-A1- 2022 030 019**

• **LANDAUER MAX ET AL: "AMiner: A Modular Log Data Analysis Pipeline for Anomaly-based Intrusion Detection", DIGITAL THREATS: RESEARCH AND PRACTICE (DTRAP), ACMPUB27, NEW YORK, NY, vol. 4, no. 1, 31 March 2023 (2023-03-31), pages 1 - 16, XP058983819, ISSN: 2692-1626, DOI: 10.1145/3567675**
• **LANDAUERMAX: "aminer TryItOut . ait-aecid/ logdata-anomaly-miner Wiki . GitHub", 7 August 2023 (2023-08-07), XP093292036, Retrieved from the Internet <URL:https://github.com/ait-aecid/logdata-anomaly-miner/wiki/aminer-TryItOut>**

**Beschreibung**

Die Erfindung betrifft ein Verfahren zur Konfiguration eines Erkennungssystems zur Charakterisierung anomaler Betriebszustände eines Computersystems.

Aus dem Stand der Technik ist bekannt, Protokolle, d.h. von auf einem Computersystem ablaufenden Programmen erstellte Meldungen, heranzuziehen, um abzuschätzen, ob sich das betreffende Computersystem in einem anomalen Betriebszustand befindet. Die Erkenntnis, dass der Betriebszustand anomal ist, d.h. von einem zuvor bestehenden Normalzustand abweicht, lässt unterschiedliche Schlussfolgerungen über den Betrieb des Computersystems zu, beispielsweise kann die Feststellung eines anomalen Betriebszustands einen Hinweis auf eine Manipulation des Computersystems geben.

Aus dem Stand der Technik sind einzelne Verfahren bekannt, die jeweils zwei unterschiedliche Protokollzeilen aus Protokolldateien miteinander vergleichen, auf diese Weise typische Muster ableiten und derart anomale Betriebszustände eines Computersystems detektieren. Der Vergleich erfolgt dabei üblicherweise Token-basiert zwischen jeweils zwei Protokollzeilen, d.h. dass vorausgesetzt wird, dass die Protokollzeilen aus Zeichenblöcken bzw. Substrings bestehen, die durch vorgegebene Zeichen, wie z.B. Leerzeichen, voneinander getrennt sind.

Derartige Vorgehensweisen ermöglichen grundsätzlich das Auffinden von anomalen Zuständen in einem Computersystem, sind jedoch aufgrund des nur paarweisen Vergleichs mit einem hohen Ressourcenbedarf und daraus folgendem Zeitaufwand verbunden, wenn eine große Anzahl von Protokollzeilen untersucht werden soll, da jede einzelne Protokollzeile mit allen anderen bereits als gutartig klassifizierten Protokollzeilen verglichen werden muss.

Im Stand der Technik stehen unterschiedliche Detektoren zur Verfügung, die es erlauben, nach unterschiedlichen Mustern Abweichungen in Protokollzeilen festzustellen. Dabei besteht jedoch das Problem, dass ein Detektor nur dazu geeignet ist, eine bestimmte Art von Abweichung festzustellen und dass es nicht für jede Art von künftig potenziell auftretender Anomalie möglich ist, einen Detektor zu bestimmen, der in einer bestimmten Systemkonfiguration dazu in der Lage ist, Abweichungen festzustellen.

Darüber hinaus ist es auch nicht ohne weiteres möglich, einen Detektor so zu konfigurieren, dass dieser vorab für sämtliche auftretende Fälle von Anomalien sensitiv ist.

Die Publikation Max Landauer et al., "AMiner: A Modular Log Data Analysis Pipeline for Anomaly-based Intrusion Detection", DIGITAL THREATS: RESEARCH AND PRACTICE (DTRAP), ACMPUB27, New York, NY, Bd. 4, Nr. 1 (2023-03-31), Seiten 1-16, XP058983819, ISSN: 2692-1626, DOI: 10.1145/3567675, offenbart eine protokollbasierte Anomalieerkennung, die dadurch vereinfacht ist, dass sie ein Open-Source-Tool in der AECID-Toolbox verwendet, das eine Protokollanalyse, -auswertung und -warnung ermöglicht.

Es ist daher die Aufgabe der Erfindung, ein Erkennungssystem so zu konfigurieren, dass es nach dieser Konfiguration in der Lage ist, anomale Betriebszustände mit unterschiedlichen Detektoren zu erkennen, ohne dass besondere manuelle Einstellungen einzelner verwendeter Detektoren vorgenommen werden müssen.

Die Erfindung löst diese Aufgabe bei einem Verfahren der eingangs genannten Art mit den Merkmalen des Patentanspruchs 1.

Dabei ist vorgesehen, dass:

- von dem Computersystem (1) während des Betriebs des Computersystems (1) Protokolle erstellt werden, indem von dem Computersystem (1) bei Auftreten vorgegebener Ereignisse für jedes dieser Ereignisse jeweils ein Protokolldatensatz in Form einer Protokollzeile ($P$; $P_1$, $P_2$, $P_3$) erstellt wird, wobei aus der Protokollzeile ($P$; $P_1$, $P_2$, $P_3$) eine Anzahl von Werten extrahiert wird und jeder dieser Werte jeweils einem Schlüssel zugeordnet wird,
- wobei für das Erkennungssystem eine Anzahl von Detektoren vorgegeben wird, wobei jedem Detektor Folgendes zugeordnet wird:

    - ein Detektionskriterium, das auf einen oder mehrere einer Protokollzeile unter Vorgabe eines bestimmten Schlüssels zugeordneten Wert(e) anwendbar ist und für eine oder mehrere zu untersuchende Protokollzeilen angibt, ob diese von einem normalen Betriebszustand herrührt,
    - ein oder mehrere Schlüsselauswahl-Parameter, mit dem oder denen das vom Detektor verwendete Kriterium auf unterschiedliche Werte einer Protokollzeile angewendet werden kann, die durch den oder die Schlüsselauswahl-Parameter identifiziert werden,
    - eine Anzahl von konfigurierbaren Konfigurationsparametern, insbesondere Schwellenwerten und/oder Sollwerten, die vorschreiben, welchen Kriterien der oder die durch den Schlüsselauswahl-Parameter identifizierten Wert(e) genügen muss oder müssen, um dem Detektionskriterium zu genügen,
    - eine Methode zur Anpassung der Konfigurationsparameter des Detektors an die durch die Schlüsselauswahl-Parameter identifizierten Werte, sodass die Konfigurationsparameter des Detektors so eingestellt werden, dass eine vorgegebene Anzahl oder ein vorgegebener Anteil, insbesondere alle, von vorgegebenen und aus einem normalen Betriebszustand stammenden Normal-Protokollzeilen dem Kriterium des Detektors entsprechen,

- wobei gegebenenfalls mehrere Detektoren unterschiedlicher Art ausgewählt werden,
- wobei eine Anzahl von Normal-Protokollzeilen vorgegeben wird, die während eines normalen Betriebszustands erstellt wurden, und
- wobei eine Anzahl von Detektoren aufgrund der ihnen zugeordneten Methode zur Anpassung der Konfigurationsparameter so konfiguriert werden, dass die vorgegebenen Normal-Protokollzeilen oder ein vorgegebener Mindestanteil dieser vorgegebenen Protokollzeilen dem Detektionskriterium entsprechen,
- wobei zumindest ein Detektor für die Feststellung eines anomalen Betriebszustands konfiguriert wird, indem

  - mehrere Schlüsselauswahl-Parameter festgelegt werden, um ein Tupel von Werten aus der jeweiligen Protokollzeile auszuwählen,
  - ein Detektionskriterium festgelegt wird, indem die Menge von Tupeln der durch die jeweiligen Schlüsselauswahl- Parameter ausgewählten Werte der vorgegebenen Normal-Protokollzeilenbestimmt wird und diese Menge als Konfigurationsparameter festgelegt wird,
  - wobei eine zu untersuchende Protokollzeile dann als Hinweis auf einen anomalen Betriebszustand erkannt wird, wenn das durch die Schlüsselauswahl-Parameter aus dieser Protokollzeile ausgewählte Tupel nicht in der ermittelten Menge von Tupeln enthalten ist,

und wobei für die einzelnen Schlüsselauswahl-Parameter anhand der vorgegebenen Normal-Protokollzeilen separat untersucht wird, ob

- die Anzahl der pro Zeiteinheit neu auftretenden unterschiedlichen Werte oder
- der Anteil der neu auftretenden unterschiedlichen Werte an der Gesamtzahl der für die Parameteranpassung vorgegebenen Protokollzeilen,

die in den Protokollzeilen dem jeweiligen Schlüsselauswahl-Parameter zugeordnet sind, unterhalb eines vorgegebenen Schwellenwerts oder einer vorgegebenen Schwellenwertfunktion liegt, und dass ein Schlüsselauswahl-Parameter nur in diesem Fall für die Bildung von Tupeln herangezogen wird.

Zur Einschränkung der Anzahl der zu verwendenden Detektoren, zur rascheren Konfiguration sowie zur Reduktion von Falschpositiven kann vorgesehen sein, dass jedem Detektor ein Prüfkriterium zugeordnet ist, das angibt, ob die Methode zur Anpassung der Konfigurationsparameter auf bestimmte, durch einen Schlüssel definierte Werte einer Anzahl von Normal-Protokollzeilen anwendbar ist oder korrekt angewendet wurde, und dass für den Fall, dass das Prüfkriterium nicht erfüllt wurde, ein Detektor verworfen und/oder nicht für die Anpassung der Konfigurationsparameter herangezogen wird und/oder die Anpassung der Konfigurationsparameter bei diesem Detektor abgebrochen wird.

Eine bevorzugte Anpassung an weitere Protokollzeilen, die auf einen normalen Betriebszustand hinweisen, die eine Reduktion von Falschpositiven erlaubt, zeichnet sich dadurch aus, dass die Konfiguration der Detektoren wie folgt optimiert wird:

- Heranziehen von Protokollzeilen die allesamt in einem normalen Betrieb des Computersystems erstellt worden sind, insbesondere der Normal-Protokollzeilen,
- Beurteilen dieser Protokollzeilen durch die Detektoren,
- Anpassung der Konfigurationsparameter anhand der erfolgten Beurteilung durch die Detektoren, derart dass ein Mindestanteil und/oder eine Mindestanzahl der Protokollzeilen als normal identifiziert wird oder eine Maximalanzahl der Protokollzeilen nicht als normal identifiziert wird, und/oder sofern eine Anpassung der Konfigurationsparameter nicht möglich ist oder anpassbare Konfigurationsparameter nicht vorhanden sind, Entfernung des jeweiligen Detektors.

Bei einem einfach zu implementierenden Detektor ist vorgesehen, dass zumindest ein Detektor für die Feststellung eines anomalen Betriebszustands konfiguriert wird, indem

- ein Schlüsselauswahl-Parameter festgelegt wird, um einen Wert aus der jeweiligen Protokollzeile auszuwählen,
- die Menge der in den vorgegebenen Normal-Protokollzeilen enthaltenen und durch die Schlüsselauswahl-Parameter ausgewählten Werte ermittelt und als Konfigurationsparameter festgelegt wird,
- wobei eine zu untersuchende Protokollzeile dann im Sinne des Detektionskriteriums als Hinweis auf einen anomalen Betriebszustand erkannt wird, wenn der durch den Schlüsselauswahl-Parameter aus dieser Protokollzeile ausgewählte Wert nicht in der ermittelten Menge enthalten ist.

Zur Vermeidung der Anwendung dieses Detektors auf zufällig verteilte Werte kann vorgesehen sein, dass für den Detektor anhand der Normal-Protokollzeilen als Prüfkriterium überprüft wird, ob die Anzahl der neu auftretenden unterschiedlichen Werte innerhalb der Menge über der Zeit oder mit steigender Anzahl der Normal-Protokollzeilen unterhalb eines vorgegebenen Schwellenwerts oder einer vorgegebenen Schwellenwertfunktion liegt.

Eine einfache Festlegung eines Schwellenwerts für das zuvor genannte Stabilitätskriterium wird erreicht, indem die Anzahl der Normal-Protokollzeilen in der Reihenfolge ihres Auftretens oder die Zeit bei der Erstellung der Normal-Protokollzeilen in eine Anzahl von Abschnitten unterteilt wird, die vorzugsweise gleiche Zeitdauer aufweisen oder die gleiche Anzahl von Normal-Protokollzeilen umfassen,

- dass für jeden dieser Abschnitte der Schwellenwertfunktion separat ein Anteil oder eine Anzahl von maximal zulässigen neu auftretenden unterschiedlichen Werten der Menge vorgegeben wird,
- dass die neu auftretenden unterschiedlichen Werte der Menge abschnittsweise mit den Werten der Schwellenwertfunktion verglichen werden, und sofern die neu auftretenden unterschiedlichen Werte die Schwellenwertfunktion übersteigen, das Prüfkriterium nicht erfüllt ist und/oder der Detektor verworfen wird.

Zur vorteilhaften Anwendung dieses Detektors auf hierfür geeignete Werte kann vorgesehen sein, dass als Prüfkriterium vor der Anpassung der Konfigurationsparameter anhand der vorgegebenen Normal-Protokollzeilen überprüft wird, ob in einer einen Schwellenwert übersteigenden Anzahl von Normal-Protokollzeilen oder einem einen Schwellenwert übersteigenden Anteil von Normal-Protokollzeilen Werte für alle durch die festgelegten Schlüsselauswahl-Parameter vorhanden oder der jeweiligen Normal-Protokollzeile zugewiesen sind.

Ein weiterer Detektor sieht vor, dass zumindest ein Detektor für die Feststellung eines anomalen Betriebszustands konfiguriert wird, indem

- ein Schlüsselauswahl-Parameter festgelegt wird, um einen Wert vom Typ Zeichenkette aus der jeweiligen Protokollzeile festzulegen,
- aus den in den Normal-Protokollzeilen enthaltenen und durch die Schlüsselauswahlparameter festgelegten Zeichenketten eine Anzahl von Zeichen-Häufigkeitswerten ermittelt wird, wobei jeder dieser Zeichen-Häufigkeitswerte angibt, wie oft ein bestimmtes Zeichen in der jeweiligen Zeichenkette auftritt,
- aus den in den Normal-Protokollzeilen enthaltenen und durch die Schlüsselauswahlparameter festgelegten Zeichenketten eine Anzahl von Zeichenpaar-Häufigkeitswerten ermittelt wird, wobei jede dieser Zeichenpaar-Häufigkeitswerten angibt, wie oft ein vorgegebenes erstes Zeichen in der jeweiligen Zeichenkette einem vorgegebenen zweiten Zeichen folgt,

anschließend für jede der vorgegebenen Normal-Protokollzeilen

- aus dem durch den Schlüsselauswahl-Parameter festgelegten Wert einer zu untersuchenden Normal-Protokollzeile jeweils Teilzeichenketten umfassend jeweils zwei Zeichen gebildet werden,
- für jede dieser Teilzeichenketten der Quotient aus dem Zeichenpaar-Häufigkeitswert für die Teilzeichenkette und dem Zeichen-Häufigkeitswert für das erste Zeichen gebildet wird, und
- aus allen diesen Quotienten der Mittelwert für die zu untersuchende Normal-Protokollzeile gebildet wird, und

ein Schwellenwert als Konfigurationsparameter ermittelt wird, der dem Minimum der genannten Mittelwerte der einzelnen Normal-Protokollzeilen, gegebenenfalls reduziert um einen vorgegebenen Wert, entspricht, wobei eine zu untersuchende Protokollzeile im Sinne des Detektionskriteriums auf Vorliegen eines anomalen Betriebszustands geprüft wird, indem

- aus dem durch den Schlüsselauswahl-Parameter festgelegten Wert einer zu untersuchenden Protokollzeile jeweils Teilzeichenketten umfassend jeweils zwei Zeichen gebildet werden,
- für jede dieser Teilzeichenketten der Quotient aus dem Zeichenpaar-Häufigkeitswert für die Teilzeichenkette und dem Zeichen-Häufigkeitswert für das erste Zeichen gebildet wird, und
- aus allen diesen Quotienten der Mittelwert für die zu untersuchende Protokollzeile gebildet wird, und

- wenn dieser Mittelwert unterhalb eines vorgegebenen Schwellenwerts liegt, die zu untersuchende Protokollzeile im Sinne des Detektionskriteriums als Hinweis auf einen anomalen Betriebszustand erkannt wird.

Zur Detektion von anomalen Betriebszuständen mittels eines konfigurierten Satzes an Detektoren kann vorgesehen sein:

- dass im Betrieb des Computersystems Protokollzeilen ermittelt werden,

- dass die konfigurierten Detektoren die so ermittelten Protokollzeilen auf das Vorliegen eines anomalen Zustands hin untersuchen, und
- dass ein anomaler Betriebszustand erkannt wird, wenn zumindest einer der Detektoren eine der Protokollzeilen als anomal erkennt.

Die Erfindung betrifft weiters auch einen Datenträger, auf dem ein Programm zur Durchführung eines erfindungsgemäßen Verfahrens abgespeichert ist.

Die Erfindung wird anhand eines bevorzugten Ausführungsbeispiels näher dargestellt:

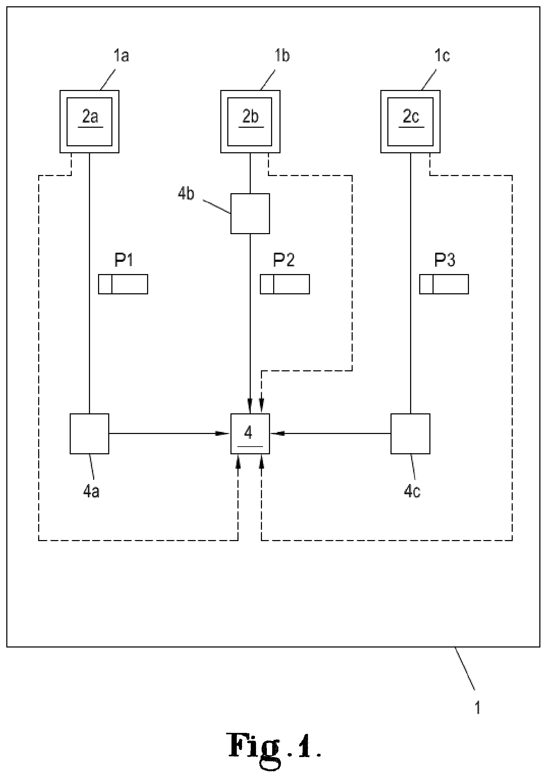

**Fig. 1** zeigt schematisch ein Beispiel eines Computersystems 1, bei dem auf einem Computer 10 mehrere Prozesse 2a, 2b, 2c ablaufen. Die Prozesse 2a, 2b, 2c erstellen zu unterschiedlichen Zeitpunkten bei Auftreten vorgegebener Ereignisse für jedes dieser Ereignisse Protokolldatensätze in Form von als Protokollzeilen P bezeichneten Zeichenketten. Im Ausführungsbeispiel in **Fig. 1** werden beispielsweise drei Protokollzeilen P1, P2, P3 erstellt.

Die einzelnen Protokollzeilen P1, P2, P3 können jeweils in Echtzeit weitergeleitet und zeitlich geordnet nach z.B. deren Erstellungszeitpunkt in eine zentrale Protokolldatei 4 geschrieben und/oder weiterverarbeitet werden. Alternativ dazu können die Protokollzeilen P1, P2, P3 jeweils in einer dem jeweiligen Prozess 2a, 2b, 2c zugehörigen Protokolldatei 4a, 4b, 4c abgespeichert werden. In diesem Fall werden die einzelnen Protokollzeilen P1, P2, P3 üblicherweise in der Reihenfolge ihres Erstellungszeitpunkts in die jeweilige Protokolldatei 4a, 4b, 4c geschrieben. Zu einem späteren Zeitpunkt können die einzelnen Protokolldatensätze der Protokolldateien 4a, 4b, 4c in eine gemeinsame zentrale Protokolldatei 4 geschrieben werden.

Bevor einzelne Protokollzeilen beurteilt werden können, wird eine Konfiguration einer Anzahl von Detektoren durchgeführt, bei der Normal-Protokollzeilen als Referenz herangezogen oder verwendet werden, die zu einem Zeitpunkt aufgenommen wurden, in dem sich das Computersystem in einem normalen Betriebszustand befunden hat. Die Gesamtheit der Detektoren wird auch als Erkennungssystem bezeichnet.

Sowohl für die Konfiguration von Detektoren wie auch für die eigentliche Detektion von anomalen Betriebszuständen wird aus den Protokollzeilen, d.h. Normal-Protokollzeilen bzw. zu untersuchenden Protokollzeilen, eine Anzahl von Merkmalen extrahiert, die der jeweiligen Protokollzeile zugeordnet werden. Hat eine Protokollzeile eine vorgegebene Form, können entsprechend dieser Form nach vorgegebenen Kriterien, Werte aus der Protokollzeile extrahiert werden. Nur beispielhaft wird an dieser Stelle eine Protokollzeile mit folgendem Inhalt untersucht, um einzelne Werte aus der Protokollzeile zu extrahieren:

> type = USER_START msg = audit (1642760221.565:662) : pid=14286 uid=0 auid=0 ses=98 msg='op=PAM:session_open acct="root"
> exe="/usr/sbin/cron" hostname=? addr=? terminal=cron res=success'

Enthält die jeweilige Protokollzeile beispielsweise eine konstante Zeichenkette, z.B. "acct=", kann der Protokollzeile jeweils der nachfolgende Wert *"root"* zugeordnet werden. Ebenso kann beispielsweise der Protokollzeile der Wert *"/usr/sbin/cron"* zugeordnet werden, wenn die Zeichenkette "exe=" aufgefunden wird. Jeder Protokollzeile können damit unterschiedliche Werte mit unterschiedlichen Schlüsseln zugewiesen werden. Die einzelnen durch die Schlüssel indizierten Werte werden im Folgenden auch als Variablen bezeichnet. Je nach Art der Syntax, die für die Erstellung der Protokollzeile verwendet wird, können unterschiedliche Parser bzw. Extraktionsroutinen herangezogen werden, um die einzelnen Schlüssel-/Wertpaare zu extrahieren und der jeweiligen Protokollzeile zuzuweisen.

Am Ende dieses Vorgehens, das für jede der Normal-Protokollzeilen oder zu untersuchenden Protokollzeilen nach denselben Vorgaben durchgeführt wird, liegt eine Datenstruktur vor, die jeder Protokollzeile eine assoziative Zuordnung beliebig vieler Werte unter Vorgabe eines bestimmten Schlüssels ermöglicht. Diese Datenstruktur kann beispielsweise als Tabelle dargestellt werden, wobei nicht bei jeder Protokollzeile sämtlichen dargestellten Schlüsseln ein Wert zugewiesen sein muss.

| Nr | A | B | C | D | E |
|----|---|-----|-----|----|----|
| 0 | a | b10 | abc | d1 | c2 |
| 1 | a | b0 | xyz | | c2 |
| 2 | | b12 | abc | d1 | |
| 3 | a | | abc | | c1 |
| 4 | a | b0 | xyz | d1 | |
| 5 | a | b18 | xy | d2 | c2 |
| 6 | a | b12 | xy | d1 | c1 |

(fortgesetzt)

| Nr | A | B | C | D | E |
|---|---|---|---|---|---|
| 7 | | b13 | abc | | c2 |
| 8 | a | b2 | abc | | c2 |
| 9 | a | b12 | xyz | d1 | |
| 10 | a | b8 | xyz | | c2 |
| 11 | | b11 | xyz | d2 | |

In weiterer Folge werden zur Konfiguration unterschiedliche Typen von Detektoren vorgegeben, die angepasst werden können, um einzelne Protokollzeilen zu diskriminieren. Um Protokollzeilen wirksam prüfen zu können, kann es erforderlich sein, mehrere Instanzen von Detektoren, seien sie vom selben Typ oder unterschiedlichen Typs, zu verwenden. Insbesondere können mehrere Instanzen desselben Detektors auf unterschiedliche Variablen angewendet werden.

**Detektor für konstante Werte**

Der einfachste Typ eines Detektors besteht darin, zu prüfen, ob zu einer Protokollzeile mit einem vorgegebenen Schlüssel ein- und derselbe Wert assoziiert ist. Beispielsweise kann mit einem derartigen Detektor untersucht werden, ob der Protokollzeile unter dem Schlüssel "A" der Wert "a" zugewiesen ist.

Um den vorstehend beschriebenen Detektor an die vorgegebenen Normal-Protokollzeilen anzupassen, verfügt der Detektor über Parameter, mit denen das Kriterium an die jeweilige Situation angepasst werden kann.

Zunächst wird mittels eines Schlüsselauswahl-Parameters ein Schlüssel ausgewählt, hier der Schlüssel "A".

Weiters ist dem betreffenden Detektor-Typ auch eine Methode zur Anpassung der Konfigurationsparameter des Detektors zugewiesen, der für die einzelnen Schlüssel untersucht, ob der Detektor so eingestellt werden kann, dass eine Anzahl von Normal-Protokollzeilen dem Kriterium des Detektors entspricht. Im vorliegenden Fall kann beispielsweise die Konfigurationsmethode die einzelnen einem Schlüssel zugewiesenen Werte daraufhin untersuchen, ob diese untereinander gleich sind. Ist dies, wie im vorliegenden Beispiel beim Schlüssel "A" der Fall, wird der Schlüsselauswahl-Parameter auf den Namen des Schlüssels "A" festgelegt, der weitere Konfigurationsparameter erhält den Wert "a". Der Detektor wurde damit mittels der dargestellten Konfigurationsmethode konfiguriert.

Im Ergebnis ist der Detektor damit konfiguriert zu überprüfen, ob einer zu untersuchenden Protokollzeile unter dem Schlüssel "A" ein Wert "a" zugeordnet ist. Liegt für den betreffenden Schlüssel "A" für eine zu untersuchende Protokollzeile kein zugeordneter Wert vor, wie dies beispielsweise für Zeile 7 der Fall ist, wird keine Detektion durchgeführt, die Zeile wird ignoriert.

Dieser Vorgang kann für die anderen Schlüssel, z.B. "B" oder "C" erneut durchgeführt werden, wobei eine Konfiguration des beschriebenen Detektor-Typs mittels dieser Methode der Parameteranpassung jedoch nicht möglich ist. Daher werden Detektorinstanzen mit den Schlüsselauswahl-Parametern "B" und "C" nicht erstellt.

**Detektor für mehrere mögliche Werte**

Eine einfache Abwandlung des vorstehend beschriebenen Detektors sieht vor, dass der jeweiligen Variablen bzw. dem der durch den Schlüsselauswahlparameter identifizierten Wert der später zu untersuchenden Protokollzeile nicht bloß ein einziger Wert, sondern eine Vielzahl an verschiedenen möglichen normalen Werten zugewiesen werden kann. Geht man davon aus, dass bei der Parameter-Anpassung ausschließlich Normal-Protokollzeilen analysiert werden, die von einem normalen Zustand des Computersystems herrühren, kann jeder der Werte als normal abgespeichert werden, sodass auch bei der späteren Prüfung von zu untersuchenden Protokollzeilen das Auftreten aller dieser Werte als normal angesehen werden kann.

Ein anomaler Betriebszustand kann demgemäß bei einer späteren Prüfung dann erkannt werden, wenn bei einer zu untersuchenden Protokollzeile ein Wert für den entsprechenden Schlüssel erkannt wird, der im Zuge der Anpassung der Konfigurationsparameter nicht aufgetreten ist bzw. in den Normal-Protokollzeilen nicht vorhanden war. Dieser Detektor löst also immer dann einen Alarm aus bzw. detektiert einen anomalen Zustand, wenn neue und unbekannte Werte einer Variablen gefunden werden. Für die Anpassung der Konfigurationsparameter ist es daher sinnvoll, dem Detektor Werte zu präsentieren, die ein begrenztes Set an Werten enthalten.

Zur Konfiguration dieses Detektors wird zunächst ein Schlüsselauswahl-Parameter festgelegt, um einen bestimmten, durch diesen Schlüsselauswahl-Parameter festgelegten Wert aus der jeweiligen Protokollzeile zu extrahieren.

Zur Anpassung der Konfigurationsparameter werden diejenigen Werte ermittelt, die in den Normal-Protokollzeilen durch den Schlüsselauswahl-Parameter indiziert werden. Dabei wird die Menge der durch den Schlüsselauswahl-Parameter ausgewählten Werte der Normal-Protokollzeilen bestimmt und in einer Datenstruktur, z.B. in einer Liste, abgespeichert. Diese Menge wird als Konfigurationsparameter bzw. als Menge der einen Normalzustand indizierenden Werte festgelegt und dem Detektor zugeordnet. Grundsätzlich kann dabei so vorgegangen werden, dass zur Festlegung der Menge mehrfach in den Normal-Protokollzeilen auftretende Werte lediglich einmal abgespeichert werden.

Im Detektionsbetrieb, d.h. nach der Konfiguration, wird eine zu untersuchende Protokollzeile dann als Hinweis auf einen anomalen Betriebszustand erkannt, wenn der durch den Schlüsselauswahl-Parameter aus dieser zu untersuchenden Protokollzeile ausgewählte Wert nicht in der ermittelten Menge der einen Normalzustand indizierenden Werte enthalten ist.

Um zu prüfen, ob die durch den betreffenden Schlüsselauswahl-Parameter festgelegten Werte für die Anwendung des Detektors geeignet sind, kann das folgende Prüfkriterium herangezogen werden, mit dem geprüft wird, ob die Anzahl der zulässigen Werte für die Variable stabil ist, d.h. ob sich die Anzahl der einzigartigen oder eindeutigen Werte in den Normal-Protokollzeilen für die betreffende Variable einem konstanten Wert annähert. Wenn in diesem Zusammenhang von der Anzahl der Elemente einer Menge die Rede ist, ist hierunter stets die Anzahl der eindeutigen oder einzigartigen Elemente zu verstehen.

Um zu kontrollieren, ob die Anzahl der auftretenden Werte diesem Stabilitätskriterium entspricht, wird eine Funktion f(x) erstellt, die die Anzahl der einzigartigen Werte über die Anzahl der Normal-Protokollzeilen (Funktion f(x)) angibt. Sind beispielsweise nach der Analyse von 100 Normal-Protokollzeilen 10 eindeutige Werte ermittelt worden, so ist f(100)=10.

Die Funktion f(x) kann alternativ auch als die Anzahl der einzigartigen Werte einer betreffenden Variablen über die Zeit verstanden werden. Sind z.B. während eines der Parameteranpassung zugrunde liegenden normalen Betriebszustands nach 50 Sekunden N Normal-Protokollzeilen ermittelt worden, und sind in diesen N Normal-Protokollzeilen 15 eindeutige Werte ermittelt worden, so ergibt sich f(50s)=15.

Bevorzugterweise werden die Achsen der Funktion f(x) vorab normalisiert, d.h. skaliert, beispielsweise in einer Form, dass f(0)=0 und f(1)=1.

Um nun die Stabilität der auftretenden Werte feststellen zu können, wird untersucht, ob die Funktion f(x) ab einer bestimmten Anzahl von Normal-Protokollzeilen oder nach einer bestimmten Zeit gegen einen Wert konvergiert bzw. sich nicht mehr stark ändert. Um eine solchen Stabilität feststellen zu können, wird bevorzugt nicht die zuvor beschriebene Funktion f(x) untersucht, sondern deren erste zeitliche Ableitung f'(x). Die erste zeitliche Ableitung kann dann auf unterschiedliche Weisen näherungsweise berechnet werden.

Diese zeitliche Ableitung f'(x) beschreibt somit die Änderung der Anzahl der einzigartigen Werte pro Logzeile über die auftretenden Logzeilen. Für die Erfüllung des Prüfungskriteriums, d.h. des Stabilitätskriteriums, sollte sich die zeitliche Ableitung f'(x) am Ende des Konfigurationsvorgangs dem Wert Null annähern, d.h. ab einem bestimmten Zeitpunkt sollten keine neuen Werte mehr hinzukommen.

Um ein solches Verhalten zu quantifizieren, wird im nächsten Schritt eine obere Grenzkurve für die zeitliche Ableitung f'(x) festgelegt, die von der zeitlichen Ableitung f'(x) einer als stabil zu klassifizierenden Funktion nicht überschritten werden darf. Eine solche Grenzkurve kann definiert werden, indem die zeitlich auftretenden Indizes x der einzelnen Logzeilen in eine Anzahl von n Segmenten unterteilt werden. Für jedes dieser Segmente wird ein Grenzwert der zeitlichen Ableitung f'(x) vorgegeben.

Da die Änderung f'(x) der Anzahl der einzigartigen Werte nicht den Wert 1 übersteigt kann dieser Mittelwert - da jeweils nur ein neuer Wert pro Protokollzeile hinzukommen kann - als relative Änderung pro Segment wahrgenommen werden.

Zur konkreten Definition der Grenzkurve können nun seitens des Benutzers die einzelnen Grenzwerte segmentweise vorgegeben werden. Da diese Grenzwerte stets eine relative Änderung angeben, können diese Grenzwerte unabhängig von der Anzahl der verwendeten Protokollzeilen fest vorgegeben werden, eine Anpassung ist idR nicht erforderlich.

Ein Beispiel für die segmentweise definierten Grenzwerte ist etwa [1, 0.7, 0.3, 0.1]. In einer solchen Situation wären die zeitlich hintereinander eintreffenden Normal-Protokollzeilen in vier gleich lange Segmente unterteilt. Für das erste Segment, d.h. das erste Viertel der auftretenden Werte ist dann eine 100%ige Änderung erlaubt, d.h. während dieses Segments können grundsätzlich auch ausschließlich voneinander verschiedene unterschiedliche Werte für die betreffende Variable auftreten. Für das zweite Segment ist eine 70%ige Änderung erlaubt, d.h. es dürfen lediglich 70% der Normal-Protokollzeilen für die betreffende Variable neue Werte enthalten, während die übrigen 30% Protokollzeilen für die betreffende Variable Werte enthalten müssen, die bereits einmal in einer vorherigen Normal-Protokollzeile vorgekommen sind. In den beiden nachfolgenden Segmenten muss dieser Anteil entsprechend der beispielhaft gegebenen Grenzfunktion geringer als 30% bzw. 10% sein, um eine Stabilität der Werte feststellen zu können.

Sind die Mittelwerte der Ableitung der Kurve f'(x) in den einzelnen Segmenten kleiner oder gleich den durch die Grenzkurve vorgegebenen Schwellenwerten, wird eine durch einen Schlüssel indizierte Variable als stabil erachtet. Ein derart angepasster Detektor kann damit für die Prüfung von zu untersuchenden Protokollzeilen herangezogen werden.

Die vorstehend beschriebene Stabilität bildet in diesem Fall ein Prüfkriterium für den Detektor, d.h. ist dieses Prüfkriterium erfüllt, werden die einzelnen Werte, die im Zuge der Konfiguration für die betreffende Variable aufgefunden wurden, dem Detektor für die spätere Prüfung von zu untersuchenden Protokollzeilen übergeben. Der Detektor kann bei der späteren Prüfung neu auftretender Protokollzeilen verwendet werden. Ist die betreffende Variable unter den Protokollzeilen nach dem vorgegebenen Prüfkriterium hingegen nicht stabil, wird der Detektor hingegen verworfen, d.h. eine Überprüfung der betreffenden Variable wird nicht vorgenommen.

Der vorliegende Detektor hat den Vorteil, dass das Prüfkriterium auch gleichzeitig oder gemeinsam mit der Anpassung der Konfigurationsparameter ermittelt werden kann. Während die einzelnen Normal-Protokollzeilen an den Detektor zur Anpassung der Konfigurationsparameter bzw. zur Ermittlung der Menge der normalen Werte, übergeben werden, kann gleichzeitig die Entwicklung der Funktion f(x) oder deren Ableitung f' (x) überprüft werden. Zeigt sich, dass etwa im zweiten Segment die Anzahl der neu hinzukommenden Werte größer ist als 70% der hier verwendeten Normal-Protokollzeilen, kann die Anpassung der Konfigurationsparameter abgebrochen und der Detektor verworfen oder zumindest nicht unter Verwendung des betreffenden Schlüsselauswahlparameters verwendet werden.

Für die allgemeine Konfiguration und Prüfung des Detektors wird grundsätzlich lediglich die Form der Grenzkurve für die zeitliche Ableitung f' (x), d.h. die Anzahl der verwendeten Segmente sowie die einzelnen für die Segmente gewählten konstanten Schwellenwerte benötigt. Weitere Einstellungen oder dynamische Anpassungen sind hingegen nicht erforderlich.

Neben einem Detektor, der auf das Auftreten bestimmter Werte sensitiv ist, kann ein Detektor, der auf Variablen vom Typ Zeichenkette anwendbar ist, auch ein Detektionskriterium aufweisen, das eine Anomalie feststellt, wenn die Zeichenketten der betreffenden Variable ein Zeichen oder Symbol enthält, das nicht in einer während der Parameteranpassung ermittelten Liste von gültigen Zeichen enthalten ist.

## Detektion von Kombinationen

Im Zuge der Erfindung ist es auch möglich, einen Detektor zu verwenden, der nicht bloß auf einen einzelnen durch einen Schlüssel indizierten Variablenwert, sondern auf eine Vielzahl solcher Werte zugreift. Der hier beschriebene Detektor ähnelt also dem zuvor beschriebenen Detektor, unterscheidet sich von diesem jedoch darin, dass er nicht einzelne Variablen, sondern Kombinationen von Variablen untersucht. Eine Protokollzeile wird demgemäß als anomal erkannt, wenn eine neue und unbekannte Wertekombination für die entsprechende Variablenkombination bzw. das entsprechende Tupel der Variablen gefunden wird.

Zur Festlegung dieser Variablen werden mehrere Schlüsselauswahl-Parameter festgelegt, um Werte aus der jeweiligen Protokollzeile zu extrahieren. Im Zuge der Parameteranpassung soll nun eine Menge von Tupeln der durch die jeweiligen Schlüsselauswahl-Parameter ausgewählten Werte der Normal-Protokollzeilen bestimmt werden. Diese Menge von Tupeln bildet dabei einen Konfigurationsparameter, der dem jeweiligen Detektor für die spätere Anomalieerkennung zugewiesen wird.

Unter einem Tupel versteht man dabei eine geordnete Anzahl von Elementen. Durch die Angabe der Schlüsselauswahlparameter wird klargestellt, die Werte welcher Variablen an welcher Stelle des jeweiligen Tupels stehen. Je nach Vorgabe der Schlüsselauswahl-Parameter enthalten die einzelnen Tupel jeweils eine vorgegebene Anzahl von Werten, die bei allen ermittelten Tupeln gleich ist. Zwei Tupel gelten - im Sinne der späteren Definition der Eindeutigkeit zweier Tupel - dann als gleich, wenn alle ihre Einträge jeweils elementweise gleich sind. Liegt für eine der Variablen in einer Normal-Protokollzeile kein entsprechender Wert vor, kann im betreffenden Tupel ein entsprechender NULL-Eintrag vorgenommen werden. Alternativ kann die betreffende Normal-Protokollzeile auch von der weiteren Anpassung der Konfigurationsparameter ausgeschlossen werden.

Stellt sich beispielsweise heraus, dass bestimmte Kombinationen oder Tupel von Variablenwerten häufig gemeinsam auftreten oder dass einzelne Tupel, gebildet aus den jeweiligen Variablenwerten einer Normal-Protokollzeile stets aus einer vorgegebenen Menge von Tupeln stammen, kann ein Detektor derart ausgebildet sein, Protokollzeilen als anomal zu klassifizieren, deren entsprechende Tupel von Variablenwerten nicht in der betreffenden Menge enthalten sind. Beispielsweise kann unter Vorgabe der beiden Schlüsselauswahl-Parameter "A" und "D" die folgende Menge von Tupeln identifiziert werden: {["a", "d1"], ["a", "d2"], ["a", NULL], [NULL, "d2"]}.

Für den Detektor wird damit als Prüfkriterium anhand der Normal-Protokollzeilen überprüft, ob in einer einen Schwellenwert übersteigenden Anzahl von Normal-Protokollzeilen oder einem einen Schwellenwert übersteigenden Anteil von Normal-Protokollzeilen für alle durch die festgelegten Schlüsselauswahl-Parameter ausgewählten Werte vorhanden oder der jeweiligen Normal-Protokollzeile zugewiesen sind.

Ein Detektionskriterium kann dann so festgelegt werden, dass eine zu untersuchende Protokollzeile dann als Hinweis auf einen anomalen Betriebszustand erkannt wird, wenn das durch die Schlüsselauswahl-Parameter aus dieser Protokollzeile ausgewählte Tupel nicht in der ermittelten Menge enthalten ist.

Bevor der Detektor entsprechend dieser Methode konfiguriert wird und für alle möglichen Kombinationen von Variablen zulässige Mengen von Tupeln identifiziert werden, die vom entsprechenden Detektor verwendet werden können, ist es von Vorteil, auf einzelne sinnvolle verwendbare Variablen und Variablenkombinationen vorab zu prüfen. Andernfalls wäre nämlich eine große Anzahl möglicher Tupelkombinationen und damit ebenso viele Detektoren zu konfigurieren. Eine Prüfung wird nach dem folgenden Prüfkriterium idealerweise also vor der Parameteranpassung durchgeführt.

Für die Prüfung werden alle Variablen einzeln untersucht, wobei zufällige Variablen nicht als Variablen für die Bildung von Tupeln herangezogen werden. Unter einer zufälligen Variablen versteht man in diesem Zusammenhang eine Variable, die das zuvor beschriebene Stabilitätskriterium, gegebenenfalls mit einer abweichend definierten Grenzfunktion nicht erfüllt, und typischerweise für jede neue Normal-Protokollzeile einen neuen Wert liefert. Zufällige Variablen besitzen damit eine nicht-begrenzte Menge an Werten und führen somit häufig zu zufälligen Wertekombinationen und langen und potentiell unvollständigen Mengen von Tupeln. Das bedeutet, dass eine Kombination, die eine oder mehrere zufällige Variablen enthält, bei fast jeder neuen Normal-Protokollzeile eine neue und bisher unbekannte Wertekombination erhält. Daher ist es für einen Detektor kaum möglich, aus Kombinationen, die Zufallsvariablen enthalten, eine nützliches Parameteranpassung vorzunehmen und derart Normalverhalten zu erlernen.

Für die einzelnen Schlüsselauswahl-Parameter wird dabei anhand der Normal-Protokollzeilen die Stabilität jeweils separat untersucht, wie dies bereits auch vorstehend beschrieben wurde. Als Maß für die Stabilität kann dabei entweder die Anzahl der pro Zeiteinheit neu auftretenden unterschiedlichen Werte oder der Anteil der neu auftretenden unterschiedlichen Werte an der Gesamtzahl der Normal-Protokollzeilen herangezogen werden, die in den Normal-Protokollzeilen dem jeweiligen Schlüsselauswahl-Parameter zugeordnet sind. Liegt dieser Maßwert unterhalb eines vorgegebenen Schwellenwerts oder unterhalb einer vorgegebenen Schwellenwertfunktion, kann der jeweilige Schlüsselauswahl-Parameter für die Bildung von Tupeln herangezogen und festgelegt werden. Grundsätzlich ist es dabei möglich, die bereits vorstehend beschriebenen Schwellenwertfunktionen zu verwenden. Es ist aber auch möglich, für die Verwendung einer Variablen in Tupeln abweichende Schwellenwerte oder Schwellenwertfunktionen zu verwenden.

Durch diese Maßnahme kann der rechnerische Aufwand für die Anpassung der Konfigurationsparameter verringert werden, eine Vielzahl von nicht aussagekräftigen Detektoren wird damit nicht konfiguriert. Das Aussondern von zufälligen Variablen ist ähnlich der Auswahl von stabilen Variablen.

Ebenso ist es möglich, konstante Variablen vorab auszusondern, da mit deren Hinzunahme ebenfalls kein zusätzlicher Erkenntnisgewinn verbunden ist. Die Anzahl der Detektor-Instanzen dieses Detektors kann damit drastisch reduziert werden.

Die vorstehend genannte beispielhafte Vorgehensweise zur Detektion von geeigneten Kombinationen von Variablenwerten wurde anhand von Zweierkombinationen von Variablen dargestellt, d.h. es wurden jeweils Tupel mit jeweils zwei Einträgen verwendet. Grundsätzlich ist eine solche Vorgehensweise auch für Kombinationen von mehreren Variablen möglich.

Aufgrund der großen Anzahl vom möglichen Variablenkombinationen hat es sich jedoch als einfacher herausgestellt, zunächst einzelne Zweier-Kombinationen von Variablen zu ermitteln. Stellt sich dabei heraus, dass einzelne Variablen in mehreren solchen VariablenKombinationen enthalten sind, können diese Paare zu N-Tupeln zusammengefasst werden. Stellt sich beispielsweise heraus, dass sowohl die Variablenkombination ["A", "D"] als auch die Variablenkombination ["A", "E"] zur Parameteranpassung verwendet werden kann, kann auch ein 3-Tupel bzw. Tripel ["A", "D", "E"] verwendet werden. Vorteilhaft an dieser Vorgehensweise ist, dass zur Ermittlung dieses Tripels nicht alle Dreierkombinationen der Variablen untersucht werden müssen, sondern lediglich alle Zweierkombinationen.

## Entropiedetektor

Im Folgenden wird ein weiterer Detektor beschrieben, der Variablenwerte vom Typ Zeichenkette verarbeitet und der Anomalien in einzelnen Variablen der zu untersuchenden Protokollzeilen anhand der Zeichenpaarwahrscheinlichkeit, d.h. anhand der Wahrscheinlichkeit, dass ein Zeichen auf ein bestimmtes anderes Zeichen folgt, detektiert. Ein solcher Detektor ist beispielsweise beschrieben in:

M. Landauer, M. Wurzenberger, F. Skopik, W. Hotwagner, and G. Höld, "Aminer: A modular log data analysis pipeline for anomaly-based intrusion detection," Digital Threats, vol. 4, Mar 2023.

Für den vorliegenden Detektor wird - wie auch bei den zuvor beschriebenen Detektoren - mittels eines Schlüsselauswahl-Parameters festgelegt, welcher Wert aus der jeweiligen Normal-Protokollzeile entnommen werden soll. Bei diesem Wert handelt es sich um eine Zeichenkette.

Die Anpassung der Konfigurationsparameter dieses Detektors basiert auf der Erstellung von Häufigkeitstabellen. Dabei wird eine Anzahl von Zeichen-Häufigkeitswerten f("a") ermittelt, wobei jeder dieser Zeichen-Häufigkeitswerte angibt, wie oft ein Zeichen in der jeweiligen Zeichenkette auftritt, die in den Normal-Protokollzeilen durch den Schlüsselauswahl-Parameters ausgewählt wird. Zur Speicherung dieser Tabelle kann beispielsweise ein assoziativer Speicher verwendet werden, der dem betreffenden Zeichen "a" als Schlüssel den jeweiligen Häufigkeitswert zuweist.

Anschließend wird für jedes Paar von aufeinander folgenden Zeichen oder Symbolen eine Zeichenpaar-Häufigkeitstabelle erstellt. Dabei wird jeweils die Anzahl von Zeichenpaar-Häufigkeitswerten ermittelt, wobei jede dieser

**EP 4 657 292 B1**

Zeichenpaar-Häufigkeitswerten angibt, wie oft ein erstes Zeichen (z.B. "a") in der jeweiligen Zeichenkette einem zweiten Zeichen (z.B. "b") folgt, wobei zur Bildung dieser Tabelle verwendeten Zeichenketten aus den Normal-Protokollzeilen durch den Schlüsselauswahl-Parameters ausgewählt werden. Zur Speicherung dieser Tabelle kann beispielsweise ein doppelt-assoziativer Speicher verwendet werden, der den betreffenden Zeichen "a", "b" als Schlüssel-Tupel den jeweiligen Zeichenpaar-Häufigkeitswert zuweist.

Anschließend werden für die Normal-Protokollzeilen aus dem durch den Schlüsselauswahl-Parameter festgelegten Werten jeweils Teilzeichenketten umfassend zwei Zeichen gebildet. Entspricht beispielsweise einer der ausgewählten Werte der Zeichenkette "abc", erhält man dementsprechend die beiden Teilzeichenketten "ab" und "bc".

Für jede dieser Teilzeichenketten "ab" und "bc" wird nun separat der Quotient aus dem jeweiligen Zeichenpaar-Häufigkeitswert F("ab") und dem Zeichen-Häufigkeitswert F("a") für das erste Zeichen gebildet. Unter diesen für jede Teilzeichenkette ermittelten Quotienten wird über die gesamte aus der jeweiligen Protokollzeile ausgewählte Zeichenkette ein Mittelwert ermittelt, der auch als kritischer Wert bezeichnet wird. Im Falle der Zeichenkette "abc" kann dieser kritische Wert p z.B. wie folgt ermittelt werden:

$$p = (\; F(\text{„ab"}) \; / \; F(\text{„a"}) \; + \; F(\text{„bc"}) \; / \; F(\text{„b"}) \;)/2$$

Dieser kritische Wert oder Mittelwert p ist ein Maßwert dafür, wie gewöhnlich oder ungewöhnlich eine bestimmte Zeichenkette bzw. die Abfolge ihrer Teilzeichenketten ist, wobei als Vergleichsbasis die für die Parameteranpassung vorgegebenen Protokollzeilen herangezogen wird. Je ungewöhnlicher eine Zeichenkette ist, umso kleiner ist ihr kritischer Wert oder Mittelwert p.

Sowohl die Tabelle der Zeichen-Häufigkeitswerte sowie die Tabelle der Zeichenpaar-Häufigkeitswerte bilden Konfigurationsparameter, mit denen der Detektor konfiguriert wird.

Um nun als Detektionskriterium zu bestimmen, ob eine weitere in einer zu untersuchenden Protokollzeile enthaltene und durch die Schlüsselauswahlparameter festgelegte Zeichenkette im Sinne des zuvor angegebenen Maßes ungewöhnlich ist und damit auf einen anomalen Betriebszustand hindeutet, kann der kritische Wert oder Mittelwert p auch für die betreffende Zeichenkette der zu untersuchenden Protokollzeile nach der zuvor erläuterten Rechenvorschrift ermittelt werden.

Um zu entscheiden, ob ein so ermittelter kritischer Wert oder Mittelwert p zu ungewöhnlich ist, kann ein unterer Schwellenwert vorgegeben werden. Dieser Schwellenwert kann vorteilhafterweise so gewählt werden, dass sämtliche der durch die Schlüsselauswahlparameter festgelegten Zeichenketten der Normal-Protokollzeilen als normal betrachtet werden. Der Schwellenwert wird demgemäß auf das Minimum der für diese Zeichenketten bestimmten kritischen Werte oder Mittelwert p gesetzt. Es wird also ein unterer Schwellenwert als Konfigurationsparameter festgelegt, der dem Minimum der kritischen Werte bzw. Mittelwerte der Normal-Protokollzeilen entspricht.

Dieses Minimum kann zur Vermeidung von Falsch-Positiven um einen Offset-Wert reduziert werden, beispielsweise um einen Wert zwischen 0,01 und 0,1, um derart einen Puffer zwischen den am wenigsten wahrscheinlichen Werten zu haben, die noch als Teil des normalen Verhaltens angesehen werden und kritischen Werten die als anomal gelten sollten. Damit kann sichergestellt werden, dass die gleichen kritischen Werte, oder solche mit sehr nahe beieinander liegenden kritischen Werten, nicht als Anomalien klassifiziert werden.

Im Betrieb wird der kritische Wert einer zu untersuchenden Protokollzeile bzw. der in dieser Protokollzeile enthaltenen und durch den Schlüsselauswahl-Parameter festgelegten Zeichenkette vom Detektor ermittelt. Anschließend wird dieser kritische Wert mit festgelegten Schwellenwert abgeglichen; basierend auf diesem Vergleich wird entschieden, ob der Wert, d.h. die Zeichenkette als Anomalie erkannt wird oder nicht. Der Detektor löst dann einen Alarm aus bzw. stellt dann eine Anomalie fest, wenn eine Zeichenkette auftritt, deren kritischer Wert einen Schwellenwert unterschreitet.

Das Verhalten der kritischen Werte in den Normal-Protokollzeilen, die aus einem normalen Betriebszustand stammen, ist ausschlaggebend dafür, ob eine Variable sinnvoll für den Detektor ist. Um die Eignung einer Variable für die Detektion von anomalen Betriebszuständen zu bestimmen, wird in weiterer Folge der Durchschnitt über alle kritischen Werte der Variable unter den Normal-Protokollzeilen gebildet.

Dieser Durchschnitt kann somit verstanden werden als "die durchschnittliche Auftrittswahrscheinlichkeit einer Variable". Hat eine Variable also viele Werte, die sich bezüglich ihrer Zeichen (-Paare) ähneln, wird dieser Durchschnittswert eher höher sein.

Das Prüfkriterium für die Verwendung einer durch einen Schlüssel identifizierten Variable wird vorgegeben bzw. eine solche Variable wird für einen Detektor dann ausgewählt, wenn die durchschnittliche Auftrittswahrscheinlichkeit einer Variable über einem bestimmten vorgegebenen Grenzwert liegt. Dieser Grenzwert kann vom Benutzer vorab festgelegt werden.

## Parameter-Optimierung

Im Folgenden wird nun ein weiterer Optimierungsschritt dargestellt, mit dem die einzelnen Detektoren hinsichtlich ihrer Eignung zur Detektion von anomalen Betriebszuständen überprüft und optimiert werden können. Ziel dieses Optimierungsschritts ist es, Detektoren bzw. Instanzen von Detektoren, für die bereits Konfigurationsparameter ermittelt wurden, anzupassen oder zu eliminieren, wenn diese Falsch-Positive Detektionsergebnisse liefern.

Im Zuge der Optimierung werden in einem ersten Schritt weitere Protokollzeilen herangezogen, die allesamt in einem normalen Betrieb des Computersystems erstellt worden sind. Dabei kann es sich um die Normal-Protokollzeilen oder einen Teil der Normal-Protokollzeilen handeln, die bereits zur Parameteranpassung für die Detektoren verwendet wurden. Es besteht jedoch auch die Möglichkeit, dass andere Protokollzeilen für die Optimierung verwendet werden, beispielsweise können Protokollzeilen aus einem als normal betrachteten Betrieb so partitioniert werden, dass ein Teil für die Anpassung der Konfigurationsparameter und ein Teil für die nachfolgende Optimierung herangezogen wird. Diese Aufteilung kann beispielsweise in einer Weise erfolgen, dass einzelne Zeitfenster vorgegeben werden, innerhalb derer die Protokollzeilen für die Parameteranpassung, und andere Zeitfenster vorgegeben werden, innerhalb derer die Protokollzeilen für die Optimierung herangezogen werden.

In einem weiteren Schritt werden die für den Optimierungsvorgang bestimmten Protokollzeilen an die konfigurierten und gegebenenfalls anhand des Prüfkriteriums geprüften Detektoren übermittelt und von diesen geprüft.

Liefert ein Detektor im Zuge des Optimierungsvorgangs eine zu große Anzahl an Falschpositiven, d.h. an Erkennungen eines anomalen Zustands bei Vorgabe von Protokollzeilen, die aus einem normalen Betriebszustand stammen, wird dieser Detektor für eine Optimierung ausgewählt. Wann die Anzahl an Falschpositiven als zu groß eingeschätzt wird, kann durch die Vorgabe von Optimierungs-Parametern bestimmt werden. Dabei kann entweder eine Maximalzahl an Falschpositiven pro Detektor im Zuge des Optimierungsvorgangs oder aber eine maximale Rate an Falschpositiven pro Zeit im Zuge des Optimierungsvorgangs vorgegeben werden.

Ist ein Detektor zur Optimierung ausgewählt und verfügt dieser über keine numerischen konfigurierbaren Konfigurationsparameter, wie z.B. Schwellenwerte, sondern lediglich über Listen zulässiger Werte, kann der Detektor gelöscht oder verworfen und für die künftige Prüfung nicht weiter herangezogen werden.

Verfügt der Detektor jedoch über numerisch anpassbare Konfigurationsparameter, können diese Konfigurationsparameter angepasst werden, sodass der Mindestanteil und/oder eine Mindestanzahl der Protokollzeilen als normal identifiziert wird oder eine Maximalanzahl oder ein Maximalanteil der Protokollzeilen nicht als normal identifiziert wird.

Bei einem numerischen Konfigurationsparameter, wie z.B. einem Schwellenwert, kann zu diesem Zweck ein Maximum und ein Minimum für diesen Konfigurationsparameter festgelegt werden. Durch Abwandlung des betreffenden Konfigurationsparameters innerhalb des jeweiligen Minimums und Maximums kann dann nach neuen Werten für diesen gesucht werden, bei denen der Detektor einen Mindestanteil und/oder eine Mindestanzahl der Protokollzeilen als normal identifiziert.

Sofern eine solche Optimierung in Form einer Anpassung des Konfigurationsparameters keinen Erfolg bringt und weiterhin eine Maximalanzahl oder ein Maximalanteil der Protokollzeilen nicht als normal identifiziert wird, wird der betreffende Detektor verworfen und für die künftige Prüfung nicht weiter herangezogen.

Im Rahmen der Optimierung ist es auch möglich, einen numerischen Konfigurationsparameter restriktiver einzustellen. In einem nachfolgenden Schritt kann untersucht werden, ob sich durch diese Parameteranpassung die Anzahl der Falsch-Positive nicht erhöht. Ist das nicht der Fall, d.h. tritt keine Erhöhung der Anzahl der Falsch-Positive auf, kann der angepasste numerische Konfigurationsparameter verwendet werden.

## Erkennungssystem und Detektion anomaler Betriebszustände

Die Gesamtheit der einzelnen Detektoren wird als Erkennungssystem bezeichnet. Die initiale Auswahl der Arten der Detektoren kann grundsätzlich vom Benutzer oder der Benutzerin vorgegeben werden. Von jedem der Arten von Detektoren können mehrere Detektor-Instanzen, auch als Detektoren bezeichnet, erstellt werden, wobei für jeden der so erstellten Detektoren typischerweise unterschiedliche Schlüsselauswahl-Parameter verwendet werden, um das Verhalten möglichst aller in den Normal-Protokollzeilen enthaltenen Variablen abzubilden und damit prüfbar zu machen.

Anhand des jeweiligen Prüfkriteriums können die Detektoren gegebenenfalls optional prüfen, ob die Methode zur Anpassung der Konfigurationsparameter auf bestimmte, durch einen Schlüssel definierte Werte einer Anzahl von Normal-Protokollzeilen anwendbar ist oder korrekt angewendet wurde. Dies kann entweder vorab, gleichzeitig mit der Anpassung der Konfigurationsparameter oder auch nach der Anpassung der Konfigurationsparameter geschehen. In weiterer Folge können die einzelnen Detektoren, wie vorstehend beschrieben, optional optimiert werden.

Im späteren Betrieb des Erkennungssystems werden vom Computersystem erstellte zu untersuchende Protokollzeilen ermittelt. Die konfigurierten Detektoren des Erkennungssystems untersuchen die so ermittelten Protokollzeilen auf das Vorliegen eines anomalen Zustands hin. Stellt einer der Detektoren fest, dass eine der zu untersuchenden Protokollzeilen nach seinem Detektionskriterium anomal ist, wird aufgrund dieser zu untersuchenden Protokollzeile ein anomaler Betriebszustand des Computersystems festgestellt.

**Patentansprüche**

1.  Verfahren zur Konfiguration eines Erkennungssystems zur Charakterisierung anomaler Betriebszustände eines Computersystems (1), wobei

    - von dem Computersystem (1) während des Betriebs des Computersystems (1) Protokolle erstellt werden, indem von dem Computersystem (1) bei Auftreten vorgegebener Ereignisse für jedes dieser Ereignisse jeweils ein Protokolldatensatz in Form einer Protokollzeile (P; $P_1$, $P_2$, $P_3$) erstellt wird, wobei aus der Protokollzeile (P; $P_1$, $P_2$, $P_3$) eine Anzahl von Werten extrahiert wird und jeder dieser Werte jeweils einem Schlüssel zugeordnet wird,
    - wobei für das Erkennungssystem eine Anzahl von Detektoren vorgegeben wird, wobei jedem Detektor Folgendes zugeordnet wird:

        - ein Detektionskriterium, das auf einen oder mehrere einer Protokollzeile (P; $P_1$, $P_2$, $P_3$) unter Vorgabe eines bestimmten Schlüssels zugeordneten Wert(e) anwendbar ist und für eine oder mehrere zu untersuchende Protokollzeilen (P; $P_1$, $P_2$, $P_3$) angibt, ob diese von einem normalen Betriebszustand herrührt,
        - ein oder mehrere Schlüsselauswahl-Parameter, mit dem oder denen das vom Detektor verwendete Kriterium auf unterschiedliche Werte einer Protokollzeile (P; $P_1$, $P_2$, $P_3$) angewendet werden kann, die durch den oder die Schlüsselauswahl-Parameter identifiziert werden,
        - eine Anzahl von konfigurierbaren Konfigurationsparametern, insbesondere Schwellenwerten und/oder Sollwerten, die vorschreiben, welchen Kriterien der oder die durch den Schlüsselauswahl-Parameter identifizierten Wert(e) genügen muss oder müssen, um dem Detektionskriterium zu genügen,
        - eine Methode zur Anpassung der Konfigurationsparameter des Detektors an die durch die Schlüsselauswahl-Parameter identifizierten Werte, sodass die Konfigurationsparameter des Detektors so eingestellt werden, dass eine vorgegebene Anzahl oder ein vorgegebener Anteil, insbesondere alle, von vorgegebenen und aus einem normalen Betriebszustand stammenden Normal-Protokollzeilen dem Kriterium des Detektors entsprechen,

    - wobei gegebenenfalls mehrere Detektoren unterschiedlicher Art ausgewählt werden,
    - wobei eine Anzahl von Normal-Protokollzeilen vorgegeben wird, die während eines normalen Betriebszustands erstellt wurden, und
    - wobei eine Anzahl von Detektoren aufgrund der ihnen zugeordneten Methode zur Anpassung der Konfigurationsparameter so konfiguriert werden, dass die vorgegebenen Normal-Protokollzeilen oder ein vorgegebener Mindestanteil dieser vorgegebenen Protokollzeilen (P; $P_1$, $P_2$, $P_3$) dem Detektionskriterium entsprechen,
    - wobei zumindest ein Detektor für die Feststellung eines anomalen Betriebszustands konfiguriert wird, indem

        - mehrere Schlüsselauswahl-Parameter festgelegt werden, um ein Tupel von Werten aus der jeweiligen Protokollzeile (P; $P_1$, $P_2$, $P_3$) auszuwählen,
        - ein Detektionskriterium festgelegt wird, indem die Menge von Tupeln der durch die jeweiligen Schlüsselauswahl-Parameter ausgewählten Werte der vorgegebenen Normal-Protokollzeilen (P; $P_1$, $P_2$, $P_3$) be-stimmt wird und diese Menge als Konfigurationsparameter festgelegt wird,
        - wobei eine zu untersuchende Protokollzeile (P; $P_1$, $P_2$, $P_3$) dann als Hinweis auf einen anomalen Betriebszustand erkannt wird, wenn das durch die Schlüsselauswahl-Parameter aus dieser Protokollzeile (P; $P_1$, $P_2$, $P_3$) ausgewählte Tupel nicht in der ermittelten Menge von Tupeln enthalten ist,

    **dadurch gekennzeichnet, dass** für die einzelnen Schlüsselauswahl-Parameter anhand der vorgegebenen Normal-Protokollzeilen separat untersucht wird, ob

    - die Anzahl der pro Zeiteinheit neu auftretenden unterschiedlichen Werte oder
    - der Anteil der neu auftretenden unterschiedlichen Werte an der Gesamtzahl der für die Parameteranpassung vorgegebenen Protokollzeilen,

    die in den Protokollzeilen (P; $P_1$, $P_2$, $P_3$) dem jeweiligen Schlüsselauswahl-Parameter zugeordnet sind, unterhalb eines vorgegebenen Schwellenwerts oder einer vorgegebenen Schwellenwertfunktion liegt, und dass ein Schlüsselauswahl-Parameter nur in diesem Fall für die Bildung von Tupeln herangezogen wird.

2. Verfahren nach Anspruch 1, wobei jedem Detektor ein Prüfkriterium zugeordnet ist, das angibt, ob die Methode zur Anpassung der Konfigurationsparameter auf bestimmte, durch einen Schlüssel definierte Werte einer Anzahl von Normal-Protokollzeilen anwendbar ist oder korrekt angewendet wurde, und

   dass für den Fall, dass das Prüfkriterium nicht erfüllt wurde, ein Detektor verworfen und/oder nicht für die Anpassung der Konfigurationsparameter herangezogen wird und/oder die Anpassung der Konfigurationsparameter bei diesem Detektor abgebrochen wird.

3. Verfahren nach einem der vorangehenden Ansprüche, wobei die Konfiguration der Detektoren wie folgt optimiert wird:

   - Heranziehen von Protokollzeilen (P; $P_1$, $P_2$, $P_3$) die allesamt in einem normalen Betrieb des Computersystems (1) erstellt worden sind, insbesondere der Normal-Protokollzeilen,
   - Beurteilen dieser Protokollzeilen (P; $P_1$, $P_2$, $P_3$) durch die Detektoren,
   - Anpassung der Konfigurationsparameter anhand der erfolgten Beurteilung durch die Detektoren, derart dass ein Mindestanteil und/oder eine Mindestanzahl der Protokollzeilen (P; $P_1$, $P_2$, $P_3$) als normal identifiziert wird oder eine Maximalanzahl der Protokollzeilen nicht als normal identifiziert wird, und/oder sofern eine Anpassung der Konfigurationsparameter nicht möglich ist oder anpassbare Konfigurationsparameter nicht vorhanden sind, Entfernung des jeweiligen Detektors.

4. Verfahren nach einem der vorangehenden Ansprüche, **dadurch gekennzeichnet, dass** zumindest ein Detektor für die Feststellung eines anomalen Betriebszustands konfiguriert wird, indem

   - ein Schlüsselauswahl-Parameter festgelegt wird, um einen Wert aus der jeweiligen Protokollzeile auszuwählen,
   - die Menge der in den vorgegebenen Normal-Protokollzeilen enthaltenen und durch die Schlüsselauswahl-Parameter ausgewählten Werte ermittelt und als Konfigurationsparameter festgelegt wird,
   - wobei eine zu untersuchende Protokollzeile (P; $P_1$, $P_2$, $P_3$) dann im Sinne des Detektionskriteriums als Hinweis auf einen anomalen Betriebszustand erkannt wird, wenn der durch den Schlüsselauswahl-Parameter aus dieser Protokollzeile (P; $P_1$, $P_2$, $P_3$) ausgewählte Wert nicht in der ermittelten Menge enthalten ist.

5. Verfahren nach Anspruch 4, **dadurch gekennzeichnet, dass** für den Detektor anhand der Normal-Protokollzeilen als Prüfkriterium überprüft wird, ob die Anzahl der neu auftretenden unterschiedlichen Werte innerhalb der Menge über der Zeit oder mit steigender Anzahl der Normal-Protokollzeilen unterhalb eines vorgegebenen Schwellenwerts oder einer vorgegebenen Schwellenwertfunktion liegt.

6. Verfahren nach Anspruch 5, **dadurch gekennzeichnet, dass** die Anzahl der Normal-Protokollzeilen in der Reihenfolge ihres Auftretens oder die Zeit bei der Erstellung der Normal-Protokollzeilen (P; $P_1$, $P_2$, $P_3$) in eine Anzahl von Abschnitten unterteilt wird, die vorzugsweise gleiche Zeitdauer aufweisen oder die gleiche Anzahl von Normal-Protokollzeilen umfassen,

   - dass für jeden dieser Abschnitte der Schwellenwertfunktion separat ein Anteil oder eine Anzahl von maximal zulässigen neu auftretenden unterschiedlichen Werten der Menge vorgegeben wird,
   - dass die neu auftretenden unterschiedlichen Werte der Menge abschnittsweise mit den Werten der Schwellenwertfunktion verglichen werden, und sofern die neu auftretenden unterschiedlichen Werte die Schwellenwertfunktion übersteigen, das Prüfkriterium nicht erfüllt ist und/oder der Detektor verworfen wird.

7. Verfahren nach einem der vorangehenden Ansprüche, **dadurch gekennzeichnet, dass** als Prüfkriterium vor der Anpassung der Konfigurationsparameter anhand der vorgegebenen Normal-Protokollzeilen überprüft wird, ob in einer einen Schwellenwert übersteigenden Anzahl von Normal-Protokollzeilen oder einem einen Schwellenwert übersteigenden Anteil von Normal-Protokollzeilen Werte für alle durch die festgelegten Schlüsselauswahl-Parameter vorhanden oder der jeweiligen Normal-Protokollzeile zugewiesen sind.

8. Verfahren nach einem der vorangehenden Ansprüche, **dadurch gekennzeichnet, dass** zumindest ein Detektor für die Feststellung eines anomalen Betriebszustands konfiguriert wird, indem

   - ein Schlüsselauswahl-Parameter festgelegt wird, um einen Wert vom Typ Zeichenkette aus der jeweiligen Protokollzeile festzulegen,
   - aus den in den Normal-Protokollzeilen enthaltenen und durch die Schlüsselauswahlparameter festgelegten Zeichenketten eine Anzahl von Zeichen-Häufigkeitswerten ermittelt wird, wobei jeder dieser Zeichen-Häufigkeitswerte angibt, wie oft ein bestimmtes Zeichen in der jeweiligen Zeichenkette auftritt,
- aus den in den Normal-Protokollzeilen enthaltenen und durch die Schlüsselauswahlparameter festgelegten Zeichenketten eine Anzahl von Zeichenpaar-Häufigkeitswerten ermittelt wird, wobei jede dieser Zeichenpaar-Häufigkeitswerten angibt, wie oft ein vorgegebenes erstes Zeichen in der jeweiligen Zeichenkette einem vorgegebenen zweiten Zeichen folgt,
anschließend für jede der vorgegebenen Normal-Protokollzeilen

- aus dem durch den Schlüsselauswahl-Parameter festgelegten Wert einer zu untersuchenden Normal-Protokollzeile jeweils Teilzeichenketten umfassend jeweils zwei Zeichen gebildet werden,
- für jede dieser Teilzeichenketten der Quotient aus dem Zeichenpaar-Häufigkeitswert für die Teilzeichenkette und dem Zeichen-Häufigkeitswert für das erste Zeichen gebildet wird, und
- aus allen diesen Quotienten der Mittelwert für die zu untersuchende Normal-Protokollzeile gebildet wird, und

ein Schwellenwert als Konfigurationsparameter ermittelt wird, der dem Minimum der genannten Mittelwerte der einzelnen Normal-Protokollzeilen, gegebenenfalls reduziert um einen vorgegebenen Wert, entspricht,
wobei eine zu untersuchende Protokollzeile im Sinne des Detektionskriteriums auf Vorliegen eines anomalen Betriebszustands geprüft wird, indem

- aus dem durch den Schlüsselauswahl-Parameter festgelegten Wert einer zu untersuchenden Protokollzeile (P; $P_1$, $P_2$, $P_3$) jeweils Teilzeichenketten umfassend jeweils zwei Zeichen gebildet werden,
- für jede dieser Teilzeichenketten der Quotient aus dem Zeichenpaar-Häufigkeitswert für die Teilzeichenkette und dem Zeichen-Häufigkeitswert für das erste Zeichen gebildet wird, und
- aus allen diesen Quotienten der Mittelwert für die zu untersuchende Protokollzeile (P; $P_1$, $P_2$, $P_3$) gebildet wird, und
- wenn dieser Mittelwert unterhalb eines vorgegebenen Schwellenwerts liegt, die zu untersuchende Protokollzeile (P; $P_1$, $P_2$, $P_3$) im Sinne des Detektionskriteriums als Hinweis auf einen anomalen Betriebszustand erkannt wird.

9. Verfahren nach einem der vorangehenden Ansprüche, **dadurch gekennzeichnet,**

- **dass** im Betrieb des Computersystems (1) Protokollzeilen (P; $P_1$, $P_2$, $P_3$) ermittelt werden,
- **dass** die konfigurierten Detektoren die so ermittelten Protokollzeilen (P; $P_1$, $P_2$, $P_3$) auf das Vorliegen eines anomalen Zustands hin untersuchen, und
- **dass** ein anomaler Betriebszustand erkannt wird, wenn zumindest einer der Detektoren eine der Protokollzeilen (P; $P_1$, $P_2$, $P_3$) als anomal erkennt.

10. Datenträger, auf dem ein Programm zur Durchführung eines Verfahrens nach einem der vorangehenden Patentansprüche abgespeichert ist.


**Claims**

1. Method for configuring a detection system for characterizing abnormal operating states in a computer system (1), wherein

- protocols are created by the computer system (1) during the operation of the computer system (1), in that a protocol data record in the form of a protocol line (P; $P_1$, $P_2$, $P_3$) is created for each of these events by the computer system (1) when specified events occur, wherein a number of values are extracted from the protocol line (P; $P_1$, $P_2$, $P_3$) and each of these values is assigned a key respectively,
- wherein a number of detectors is specified for the detection system, wherein the following is assigned to each detector:

- a detection criterion which can be applied to one or more value(s) assigned to a protocol line (P; $P_1$, $P_2$, $P_3$) with the specification of a specific key and indicates for one or more protocol lines (P; $P_1$, $P_2$, $P_3$) to be examined whether the latter originate from a normal operating state,
- one or more key selection parameters with which the criterion used by the detector can be applied to different values of a protocol line (P; $P_1$, $P_2$, $P_3$) which are identified by the key selection parameter(s),
- a number of configurable configuration parameters, in particular threshold values and/or setpoint values, which prescribe which criteria the value(s) identified by the key selection parameter(s) need to satisfy in order to satisfy the detection criterion,
- a method for adapting the configuration parameters of the detector to the values identified by the key selection parameters, so that the configuration parameters of the detector are set in such a way that a specified number or a specified proportion, in particular all, of specified normal protocol lines originating from a normal operating state meet the criterion of the detector,

- wherein, if necessary, several detectors of different types are selected,
- wherein a number of normal protocol lines is specified which were created during a normal operating state, and
- wherein a number of detectors are configured on the basis of the method assigned to them for adjusting the configuration parameters such that the specified normal protocol lines or a specified minimum proportion of these specified protocol lines (P; $P_1$, $P_2$, $P_3$) correspond to the detection criterion,
- wherein at least one detector is configured to detect an abnormal operating state, in that

- a plurality of key selection parameters are defined in order to select a tuple of values from the respective protocol line (P; $P_1$, $P_2$, $P_3$),
- a detection criterion is defined, in that the set of tuples of values selected by the respective key selection parameters from the specified normal protocol lines (P; $P_1$, $P_2$, $P_3$) is determined and this set is defined as a configuration parameter,
- wherein a protocol line (P; $P_1$, $P_2$, $P_3$) to be examined is then recognized as an indication of an abnormal operating state if the tuple selected by the key selection parameters from this protocol line (P; $P_1$, $P_2$, $P_3$) is not contained in the determined set of tuples,

**characterized in that** for the individual key selection parameters a separate examination is carried out on the basis of the specified normal protocol lines as to whether

- the number of different values newly occurring per unit of time or
- the proportion of newly occurring different values in the total number of protocol lines specified for the parameter adjustment,

which are assigned to the respective key selection parameter in the protocol lines (P; $P_1$, $P_2$, $P_3$) is below a specified threshold value or a specified threshold value function, and **in that** a key selection parameter is only used for the formation of tuples in this case.

2. Method according to claim 1, wherein each detector is assigned a test criterion which indicates whether the method for adjusting the configuration parameters is applicable to certain values of a number of normal protocol lines defined by a key, or has been correctly applied, and
in the event that the test criterion has not been met, a detector is dismissed and/or not used for the adjustment of the configuration parameters and/or the adjustment of the configuration parameters for this detector is canceled.

3. Method according to any one of the preceding claims, wherein the configuration of the detectors is optimized as follows:

- using protocol lines (P; $P_1$, $P_2$, $P_3$) which have all been created during normal operation of the computer system (1), in particular the normal protocol lines,
- evaluating these protocol lines (P; $P_1$, $P_2$, $P_3$) with the detectors,
- adjusting the configuration parameters based on the evaluation performed by the detectors, such that a minimum proportion and/or a minimum number of protocol lines (P; $P_1$, $P_2$, $P_3$) is identified as normal or a maximum number of protocol lines is not identified as normal, and/or, if it is not possible to adjust the configuration parameters or if there are no adjustable configuration parameters, removing the respective detector.

4. Method according to any one of the preceding claims, **characterized in that** at least one detector is configured to detect an abnormal operating state, **in that**

- a key selection parameter is defined in order to select a value from the respective protocol line,
- the set of values contained in the specified normal protocol lines and selected by the key selection parameters is determined and defined as a configuration parameter,
- wherein a protocol line (P; $P_1$, $P_2$, $P_3$) to be examined is then recognized as an indication of an abnormal operating state in the sense of the detection criterion if the value selected from this protocol line (P; $P_1$, $P_2$, $P_3$) by the key selection parameter is not contained in the determined set.

5. Method according to claim 4, **characterized in that** for the detector, based on the normal protocol lines as a test criterion, it is checked whether the number of newly occurring different values within the set over time or with an increasing number of normal protocol lines is below a specified threshold value or a specified threshold value function.

6. Method according to claim 5, **characterized in that** the number of normal protocol lines in the order of their occurrence or the time at which the normal protocol lines (P; $P_1$, $P2_2$, $P_3$) are created is divided into a number of sections which preferably have the same duration or comprise the same number of normal protocol lines,

- **in that** for each of these sections of the threshold value function, a proportion or a number of maximum permissible newly occurring different values of the set is specified separately,
- **in that** the newly occurring different values of the set are compared section by section with the values of the threshold function, and if the newly occurring different values exceed the threshold function, the test criterion is not met and/or the detector is dismissed.

7. Method according to any one of the preceding claims, **characterized in that**, as a test criterion prior to the adjustment of the configuration parameters, it is checked on the basis of the specified normal protocol lines whether, in a number of normal protocol lines exceeding a threshold value or in a proportion of normal protocol lines exceeding a threshold value, values for all the defined key selection parameters are present or assigned to the respective normal protocol line.

8. Method according to any one of the preceding claims, **characterized in that** at least one detector is configured to detect an abnormal operating state, **in that**

- a key selection parameter is defined for defining a value of the character string type from the respective protocol line,
- a number of character frequency values are determined from the character strings contained in the normal protocol lines and defined by the key selection parameters, wherein each of these character frequency values indicates how often a particular character occurs in the respective character string,
- a number of character pair frequency values are determined from the character strings contained in the normal protocol lines and defined by the key selection parameters, wherein each of these character pair frequency values indicates how often a specified first character in the respective character string follows a specified second character,
then, for each of the specified normal protocol lines

- sub-strings each comprising two characters are formed from the value of a normal protocol line to be examined defined by the key selection parameter,
- for each of these sub-strings, the quotient of the character pair frequency value for the sub-string and the character frequency value for the first character is formed, and
- the mean value for the normal protocol line to be examined is formed from all of these quotients, and

a threshold value is determined as a configuration parameter, which corresponds to the minimum of the aforementioned mean values of the individual normal protocol lines, reduced by a specified value if necessary, wherein a protocol line to be examined is checked for the presence of an abnormal operating state in the sense of the detection criterion **in that**

- sub-strings each comprising two characters are formed from the value of a protocol line to be examined (P; $P_1$, $P_2$, $P_3$) defined by the key selection parameter,
- for each of these sub-strings, the quotient of the character pair frequency value for the sub-string and the character frequency value for the first character is formed, and
- the mean value for the protocol line to be examined (P; $P_1$, $P_2$, $P_3$) is formed from all of these quotients, and
- if this mean value is below a specified threshold value, the protocol line (P; $P_1$, $P_2$, $P_3$) to be examined is recognized as an indication of an abnormal operating state in the sense of the detection criterion.

**9.** Method according to any one of the preceding claims, **characterized in that**

- during the operation of the computer system (1) protocol lines (P; $P_1$, $P_2$, $P_3$) are determined,
- the configured detectors examine the protocol lines (P; $P_1$, $P_2$, $P_3$) determined in this way for the presence of an abnormal state, and
- an abnormal operating state is detected when at least one of the detectors detects one of the protocol lines (P; $P_1$, $P_2$, $P_3$) as abnormal.

**10.** Data carrier, on which a program for executing a method according to any one of the preceding patent claims is stored.

**Revendications**

**1.** Procédé de configuration d'un système de détection pour la caractérisation d'états de fonctionnement anormaux d'un système informatique (1), dans lequel

- des protocoles sont établis par le système informatique (1) pendant le fonctionnement du système informatique (1) en ce que respectivement un jeu de données de protocole est établi sous la forme d'une ligne de protocole (P ; $P_1$, $P_2$, $P_3$) par le système informatique (1) en cas de survenue d'événements prédéfinis pour chacun de ces événements, dans lequel un nombre de valeurs est extrait de la ligne de protocole (P ; $P_1$, $P_2$, $P_3$) et chacune de ces valeurs est respectivement associée à une clé,
- dans lequel un nombre de détecteurs est prédéfini pour le système de détection, dans lequel ce qui suit est associé à chaque détecteur :

    - un critère de détection qui peut être appliqué à une ou plusieurs valeur(s) associée(s) à une ligne de protocole (P ; $P_1$, $P_2$, $P_3$) sous prescription d'une clé déterminée et pour une ou plusieurs lignes de protocole à examiner (P ; $P_1$, $P_2$, $P_3$) indique si celle-ci provient d'un état de fonctionnement normal,
    - un ou plusieurs paramètres de sélection de clé, avec lequel ou lesquels le critère utilisé par le détecteur peut être appliqué à différentes valeurs d'une ligne de protocole (P ; $P_1$, $P_2$, $P_3$), qui sont identifiées par le ou les paramètres de sélection de clé,
    - un nombre de paramètres de configuration configurables, en particulier de valeurs seuil et/ou valeurs de consigne qui prédéfinissent quels critères la ou des valeurs identifiées par le paramètre de sélection de clé doit ou doivent satisfaire afin de satisfaire le critère de détection,
    - une méthode d'adaptation des paramètres de configuration du détecteur aux valeurs identifiées par les paramètres de sélection de clé, de sorte que les paramètres de configuration du détecteur soient définis de sorte qu'un nombre prescrit ou une part prescrite, en particulier toutes les lignes de protocole normales prédéfinies et provenant d'un état de fonctionnement normal correspondent au critère du détecteur,

    - dans lequel éventuellement plusieurs détecteurs de type différent sont sélectionnés,
    - dans lequel un nombre de lignes de protocole normal est prédéfini, lesquelles ont été établies pendant un état de fonctionnement normal et

dans lequel un nombre de détecteurs est configuré sur base de la méthode qui lui est associée pour l'adaptation des paramètres de configuration de sorte que les lignes de protocole normal prédéfinies ou une part minimale prédéfinie de ces lignes de protocole prédéfinies (P ; $P_1$, $P_2$, $P_3$) correspondent au critère de détection,

    - dans lequel au moins un détecteur est configuré pour la constatation d'un état de fonctionnement anormal en ce que

        - plusieurs paramètres de sélection de clé sont définis afin de sélectionner un tuple de valeurs parmi la ligne de protocole respective (P ; $P_1$, $P_2$, $P_3$),
        - un critère de détection est défini en ce que la quantité de tuples des valeurs sélectionnées par les paramètres de sélection de clé respectifs des lignes de protocole normal prédéfinies (P ; $P_1$, $P_2$, $P_3$) est déterminée et cette quantité est définie comme paramètre de configuration,
        - dans lequel une ligne de protocole à examiner (P ; $P_1$, $P_2$, $P_3$) est détectée comme indication d'un état de fonctionnement anormal lorsque le tuple sélectionné par les paramètres de sélection de clé parmi ces lignes de protocole (P ; $P_1$, $P_2$, $P_3$) n'est pas contenu dans la quantité déterminée de tuples,

**caractérisé en ce que** pour les paramètres de sélection de clé individuels, il est examiné séparément à l'aide des lignes de protocole normal prédéfinies si

- le nombre de valeurs différentes nouvellement apparues par unité de temps ou
- la part des valeurs différentes nouvellement apparues par rapport au nombre entier des lignes de protocole prédéfinies pour l'adaptation de paramètre,

qui sont associées dans les lignes de protocole (P ; $P_1$, $P_2$, $P_3$) au paramètre de sélection de clé respectif, se trouve en dessous d'une valeur seuil prédéfinie ou d'une fonction de valeur seuil prédéfinie, et **en ce qu'**un paramètre de sélection de clé est utilisé dans ce cas uniquement pour la formation de tuples.

2. Procédé selon la revendication 1, dans lequel un critère de vérification est associé à chaque détecteur, critère qui indique si la méthode d'adaptation des paramètres de configuration peut être appliquée ou a été appliquée correctement à des valeurs déterminées définies par une clé d'un nombre de lignes de protocole normal et
en ce que dans le cas où le critère de vérification n'a pas été rempli, un détecteur est rejeté et/ou n'est pas utilisé pour l'adaptation des paramètres de configuration et/ou l'adaptation des paramètres de configuration pour ce détecteur est interrompue.

3. Procédé selon l'une quelconque des revendications précédentes, dans lequel la configuration des détecteurs est optimisée comme suit :

- l'utilisation de lignes de protocole (P ; $P_1$, $P_2$, $P_3$) qui ont toutes été établies dans un fonctionnement normal du système informatique (1), en particulier des lignes de protocole normal,
- l'évaluation de ces lignes de protocole (P ; $P_1$, $P_2$, $P_3$) par les détecteurs,
- l'adaptation des paramètres de configuration à l'aide de l'évaluation effectuée par les détecteurs de telle manière qu'une part minimale et/ou un nombre minimal de lignes de protocole (P ; $P_1$, $P_2$, $P_3$) est identifiée comme normale ou un nombre maximal des lignes de protocole n'est pas identifié comme normal, et/ou dans la mesure où une adaptation des paramètres de configuration n'est pas possible ou des paramètres de configuration adaptables ne sont pas présents, le retrait du détecteur respectif.

4. Procédé selon l'une quelconque des revendications précédentes, **caractérisé en ce qu'**au moins un détecteur pour la constatation d'un état de fonctionnement anormal est configuré **en ce que**

- un paramètre de sélection de clé est défini afin de sélectionner une valeur parmi la ligne de protocole respective, la quantité des valeurs contenues dans les lignes de protocole normal prédéfinies et sélectionnées par les paramètres de sélection de clé est déterminée et est définie comme paramètre de configuration,
- dans lequel une ligne de protocole à examiner (P ; $P_1$, $P_2$, $P_3$) est détectée au sens du critère de détection comme indication d'un état de fonctionnement anormal lorsque la valeur sélectionnée par les paramètres de sélection de clé de ces lignes de protocole (P ; $P_1$, $P_2$, $P_3$) n'est pas contenue dans la quantité déterminée.

5. Procédé selon la revendication 4, **caractérisé en ce que** pour le détecteur, il est vérifié à l'aide des lignes de protocole normal comme critère de vérification si le nombre de valeurs différentes nouvellement apparues dans la quantité est inférieur à une valeur seuil prédéfinie ou une fonction de valeur seuil prédéfinie au fil du temps ou lorsque le nombre de lignes de protocole normal augmente.

6. Procédé selon la revendication 5, **caractérisé en ce que** le nombre de lignes de protocole normal dans l'ordre de leur survenue ou le moment auquel les lignes de protocole normal (P ; $P_1$, $P_2$, $P_3$) sont établies est divisé en un nombre de sections qui présentent de préférence des durées identiques ou comprennent le même nombre de lignes de protocole normal,

- **en ce que** pour chacune de ces sections de la fonction de valeur seuil, une part ou un nombre de valeurs différentes autorisées au maximum nouvellement apparues de la quantité est prédéfini séparément,
- **en ce que** les valeurs différentes nouvellement apparues de la quantité sont comparées par sections avec les valeurs de la fonction de valeur seuil et dans la mesure où les valeurs différentes nouvellement apparues dépassent la fonction de valeur seuil, le critère de vérification n'est pas rempli et/ou le détecteur est rejeté.

7. Procédé selon l'une quelconque des revendications précédentes, **caractérisé en ce qu'**il est vérifié comme critère de vérification avant l'adaptation des paramètres de configuration à l'aide des lignes de protocole normal prédéfinies si, dans un nombre dépassant une valeur seuil de lignes de protocole normal ou une part dépassant une valeur seuil de lignes de protocole normal, des valeurs pour tous les paramètres de sélection de clé définies sont présentes ou sont associées à la ligne de protocole normal respective.

8. Procédé selon l'une quelconque des revendications précédentes, **caractérisé en ce qu'**au moins un détecteur pour la constatation d'un état de fonctionnement anormal est configuré **en ce que**

- un paramètre de sélection de clé est défini afin de définir une valeur du type de chaîne de caractères de la ligne de protocole respective,
- un nombre de valeurs de fréquence de caractères est déterminé à partir des chaînes de caractères définies par les paramètres de sélection de clé et contenues dans les lignes de protocole normal, dans lequel chacune de ces valeurs de fréquence de caractères indique la fréquence de survenue d'un caractère déterminé dans la chaîne de caractères respective,
- un nombre de valeurs de fréquence de paire de caractères est déterminé à partir des chaînes de caractère définies par les paramètres de sélection de clé et contenues dans les lignes de protocole normal, dans lequel chacune de ces valeurs de fréquence de paire de caractère indique la fréquence de suivi d'un premier caractère prédéfini dans la chaîne de caractères respective d'un second caractère prédéfini,
ensuite pour chacune des lignes de protocole normal prédéfinies

- respectivement des chaînes de caractère partielles comprenant respectivement deux caractères sont formées à partir de la valeur définie par le paramètre de sélection de clé d'une ligne de protocole normal à examiner,
- pour chacune de ces chaînes de caractère partielles, le quotient est formé à partir de la valeur de fréquence de paire de caractères pour la chaîne de caractères partielle et la valeur de fréquence de caractère pour le premier caractère et
- la valeur moyenne pour la ligne de protocole normal à examiner est formée à partir de tous ces quotients et

une valeur seuil est déterminée comme paramètre de configuration qui correspond au minimum des valeurs moyennes citées des lignes de protocole normal individuelles réduite éventuellement d'une valeur prédéfinie, dans lequel une ligne de protocole à examiner est vérifiée au sens du critère de détection quant à la présence d'un état de fonctionnement anormal **en ce que**

- respectivement des chaînes de caractère partielles comprenant respectivement deux caractères sont formées à partir de la valeur définie par le paramètre de sélection de clé d'une ligne de protocole à examiner, $(P ; P_1, P_2, P_3)$,
- pour chacune de ces chaînes de caractère partielles, le quotient est formé à partir de la valeur de fréquence de paire de caractères pour la chaîne de caractères partielle et la valeur de fréquence de caractère pour le premier caractère et
- la valeur moyenne pour la ligne de protocole $(P ; P_1, P_2, P_3$ à examiner est formée à partir de tous ces quotients et
- lorsque cette valeur moyenne se trouve en dessous d'une valeur seuil prédéfinie, la ligne de protocole à examiner $(P ; P_1, P_2, P_3)$ est détectée au sens du critère de détection comme indication d'un état de fonctionnement anormal.

9. Procédé selon l'une quelconque des revendications précédentes, **caractérisé en ce que**

- des lignes de protocole $(P ; P_1, P_2, P_3)$ sont déterminées durant le fonctionnement du système informatique (1),
- les détecteurs configurés examinent les lignes de protocole ainsi déterminées $(P ; P_1, P_2, P_3)$ par rapport à la présence d'un état anormal et
- un état de fonctionnement anormal est détecté lorsqu'au moins l'un des détecteurs détecte l'une des lignes de protocole $(P ; P_1, P_2, P_3)$ comme anormale.

10. Support de données, sur lequel est enregistré un programme pour l'exécution d'un procédé selon l'une quelconque des revendications précédentes.

Fig.1.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- AMiner: A Modular Log Data Analysis Pipeline for Anomaly-based Intrusion Detection. **MAX LANDAUER et al.** DIGITAL THREATS: RESEARCH AND PRACTICE (DTRAP). ACMPUB27, 31 March 2023, 1-16

- **M. LANDAUER** ; **M. WURZENBERGER** ; **F. SKOPIK** ; **W. HOTWAGNER,** ; **G. HÖLD**. Aminer: A modular log data analysis pipeline for anomaly-based intrusion detection,. *Digital Threats*, March 2023, vol. 4